# NOUVEAU FASCICULE DE BREVET EUROPEEN

(11) **EP 0 258 101 B2**
(45) Date de publication et mention de la décision concernant l'opposition: **02.03.1994**
(45) Mention de la délivrance du brevet: 07.11.1990
(21) Numéro de dépôt: 87401761.9
(22) Date de dépôt: 28.07.1987
(51) Int. Cl.: F27B 3/08, C21C 5/52, H05B 7/11

(54) **Procédé de fusion de ferraille et four électrique pour la mise en oeuvre du procédé**
Verfahren zum Schmelzen von Schrott und Elektroofen zur Durchführung des Verfahrens
Process for melting scrap, and electric furnace for performing the process

(30) Priorité: 01.08.1986 FR 8611215
(43) Date de publication de la demande: 02.03.1988
(73) Titulaire: CLECIM, F-95863 Cergy-Pontoise (FR)
(72) Inventeur: Janiak, Robert André, F-42660 Saint-Genest-Malifaux (FR)
(74) Mandataire: Phélip, Bruno

(56) Documents cités:
- EP-A- 0 151 415
- DE-A- 2 530 828
- DE-B- 1 036 423
- DE-C- 2 558 879
- GB-A- 2 094 119
- IRON AND STEEL ENGINEER, vol. 62, no. 5, mai 1985, pages 50-54, Pittsburgh, Pennsylvania, US; S.-E. STENKVIST: "Single electrode d-c arc furnace"

## Description

L'invention a pour objet un procédé du fusion de matière brute ferreuse, spécialement de la ferraille et couvre également le four électrique perfectionné pour la mise en oeuvre du procédé.

On connaît depuis longtemps des fours électriques utilisés pour la fusion de ferraille ou autre matière brute ferreuse et la réduction du bain métallique obtenu avec addition éventuelle d'éléments d'alliage jusqu'à obtention d'un métal de composition déterminée.

D'une façon générale, un four électrique est constitué d'une cuve limitée par une paroi latérale et un fond recouvert d'une sole en matière réfractaire et fermée par un couvercle amovible en forme de voûte traversée par au moins une électrode qui généralement est consommable et constituée d'une barre de graphite montée coulissante verticalement de façon à pouvoir descendre à l'intérieur de la charge du four, normalement de la ferraille, qui est en contact avec au moins une électrode fixe placée dans la sole.

Dans le cas d'un four à courant alternatif monophasé ou d'un four à courant continu, l'électrode consommable et l'électrode de sole sont reliées aux deux pôles d'une source de courant.

Dans le cas d'un four à courant alternatif bi- ou triphasé, les électrodes consommables sont reliées aux pôles de la source de courant et la charge en contact avec l'électrode de sole constitue le neutre du système.

Il se forme ainsi entre la charge et chaque électrode consommable, un ou plusieurs arcs électriques qui produisent la fusion de la ferraille et la formation d'un bain métallique dans le fond de la cuve.

Jusqu'à présent, on utilisait surtout des fours alimentés en courant alternatif mais on a constaté que l'alimentation des électrodes en courant continu apportait de nombreux avantages tels qu'une réduction de bruit et une augmentation du rendement énergétique du fait que l'on peut utiliser des tensions supérieures à celles permises en courant alternatif.

Toutefois, jusqu'à présent on a évité d'utiliser des intensités très importantes en courant continu, car, les courants circulant toujours dans le même sens dans les conducteurs, les électrodes et le bain créent des champs magnétiques importants qui dévient les arcs. En outre, pour des puissances importantes, on utilise plusieurs électrodes de sole et conducteurs de retour, généralement trois, qui créent également des champs produisant des effets de déviation importants sur les arcs.

Tant que la charge est sous forme de ferraille, les électrodes pénètrent dans celle-ci en y creusant des puits qui déterminent une sorte d'isolement des arcs les uns par rapport aux autres et favorisent leur stabilité. En revanche, lorsque la charge est totalement fondue, les arcs soumis aux effets magnétiques, créés par le passage du courant dans les électrodes, les conducteurs et d'autres parties de l'installation, peuvent se former dans des directions imprévisibles et sont donc très instables.

La zone dans laquelle se forment les arcs et qui est à la température la plus élevée ne peut donc être maintenue au centre du four dont les parois et le fond peuvent être soumis à des températures excessives et à une usure importante du réfractaire.

Pour remédier à ces inconvénients, on s'est attaché jusqu'à présent à réaliser des installations aussi symétriques que possible, de façon que les champs magnétiques produits par la circulation du courant dans les différents conducteurs s'équilibrent mutuellement et que le ou les arcs soient maintenus verticaux.

Dans le document DE-A-3.414.392, par exemple, on fait arriver tous les conducteurs en un même point situé au-dessous du fond de la cuve, dans l'axe de celle-ci, et à partir duquel les conducteurs rayonnent dans des directions symétriques, les conducteurs négatifs remontant à la verticale le long de la paroi latérale pour se rattacher à des conducteurs flexibles de connexion avec l'électrode consommable placée au centre de la voûte.

Une telle disposition augmente la longueur des conducteurs et, par conséquent, le coût de l'installation et, en pratique, il est très difficile d'obtenir une parfaite symétrie car il ne faut pas seulement tenir compte du circuit des conducteurs, mais également de nombreuses autres influences perturbatrices.

En outre, on augmente ainsi l'encombrement de l'espace placé au-dessous de la cuve et qu'il est préférable de dégager.

L'invention a pour objet un nouveau procédé permettant de mieux contrôler les arcs et, en outre, de les diriger vers une zone déterminée du four sans chercher nécessairement à maintenir la verticalité des arcs.

Cette zone est, généralement, la zone centrale de la sole, de façon à éviter une surchauffe des parois, mais peut aussi être décalée par rapport à l'axe à un endroit, par exemple, où l'on réalise l'introduction de la ferraille froide et/ou des matières d'addition.

Conformément à l'invention selon revendication 1, on dispose, le long de la face extérieure de la cuve et à proximité immédiate de celle-ci, un ensemble de conducteurs comprenant au moins deux conducteurs de retour reliés chacun à une électrode de sole et l'on détermine le profil et l'orientation d'au moins deux conducteurs de cet ensemble de façon à produire, par passage d'un courant continu d'intensité contrôlée, des champs magnétiques dont les effets mutuels de déviation des arcs, compte-tenu de l'ensemble des influences magnétiques exercées en fonctionnement par les autres conduceurs et les différentes parties de l'installation, soient tels que les arcs se dirigent vers une zone déterminée du bain métallique.

De façon particulièrement avantageuse, les conducteurs dont on détermine le profil pour régler la convergence des arcs sont les conducteurs de retour placés sous le fond de la cuve. Le parcours de ces conducteurs le long du fond de la cuve est déterminée de façon que la résultante des efforts exercés sur les arcs par les champs magnétiques créés par le passage du courant soit aussi réduite que possible.

Dans un autre mode de réalisation, on dispose le long de la paroi de la cuve des conducteurs additionnels dont on détermine les positions et orientations et que l'on fait parcourir par des courants d'intensité contrôlée, de façon à créer des champs magnétiques susceptibles de diriger les arcs vers une zone déterminée du bain.

Selon une autre caractéristique possible du procédé de l'invention, on détermine l'épaisseur et/ou la nature du métal constituant le fond de la cuve, de telle sorte que celui-ci constitue un écran magnétique susceptible de minimiser les effets sur les arcs du passage du courant.

L'invention couvre également un four électrique selon revendication 8 perfectionné pour la mise en oeuvre du procédé et muni d'au moins deux conducteurs de retour disposés le long de la face extérieure du fond de la cuve et comprenant chacun une première partie s'écartant radialement par rapport à la zone des électrodes jusqu'à une distance pour laquelle le champ magnétique produit par le passage du courant a une influence négligeable sur l'arc électrique et une seconde partie de raccordement à la source de courant, les premières parties des électrodes s'écartant suivant des directions divergentes déterminées en tenant compte des possibilités d'implantation sur le fond de la cuve de telle sorte que, pour une longueur totale optimale de l'ensemble des conducteurs de retour, les champs magnétiques générés par le passage du courant dans lesdits conducteurs produisent par compensation mutuelle, un effet global de déviation tel que, compt-tenu de l'ensemble des influences magnétiques exercées sur les arcs, ces derniers se dirigent vers une zone déterminée du bain métallique.

L'invention sera encore illustrée sans être aucunement limitée par la description de plusieurs modes de réalisation donnés à titre d'exemple et représentés sur les schémas annexés.
- la Fig. 1 est une vue schématique d'ensemble d'un four électrique de fusion de ferraille;
- les Fig. 2, 3, 4 et 5 représentent schématiquement différents exemples de cheminement des conducteurs de retour;
- la Fig. 6 représente schématiquement en élévation une cuve de four munie d'un autre dispositif de mise en oeuvre de l'invention.

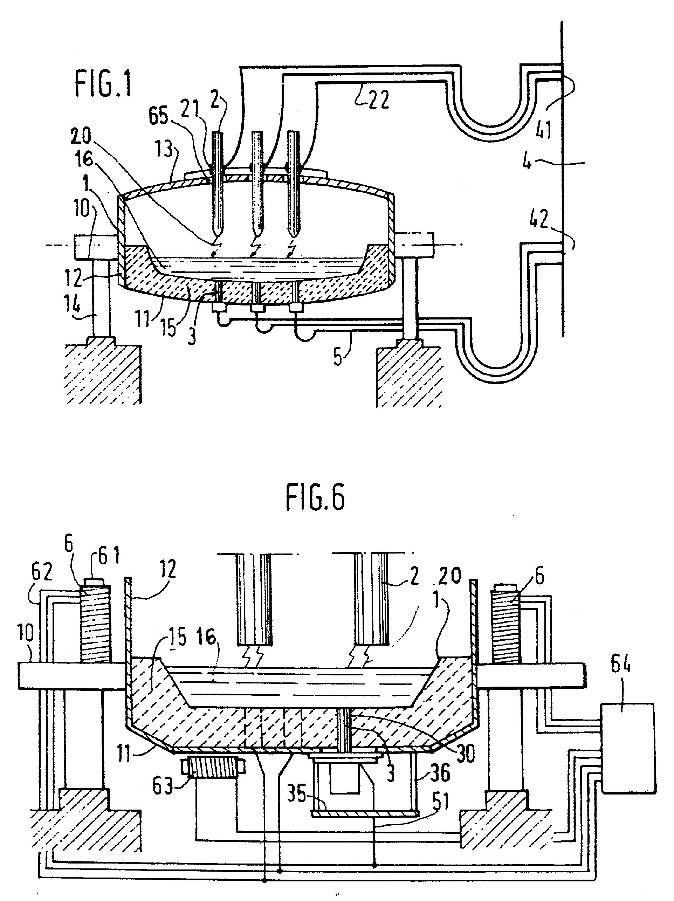

Sur la Fig. 1, on a représenté schématiquement un four électrique de fusion de ferraille comprenant une cuve 1 limitée par un fond 11 et une paroi latérale 12 et fermée par un couvercle amovible en forme de voûte 13. La cuve est supportée par des appuis roulants ou pivotants 14 permettant de la faire basculer autour d'un axe horizontal de façon à déverser par exemple d'un côté le laitier et de l'autre côté, le métal fondu. Les orifices de coulée, ainsi que l'ouverture de chargement de la ferraille n'ont pas été représentés sur la figure.

Sur la voûte 13 sont montées des électrodes consommables, par exemple trois électrodes 2 constituées de barres de graphite qui sont montées sur la cuve de façon à coulisser verticalement dans des passages 65, un dispositif 21 servant de moyen de connexion électrique. Le moyens de descente progressive des électrodes 2 n'ont pas été représentés sur la figure.

Le fond 11 de la cuve 1 est recouvert d'une sole 15 en matière réfractaire dans laquelle sont incorporées des électrodes fixes 3 qui traversent le fond 11. A proximité de la cuve 1 mais cependant à une distance suffisante pour être protégée de la chaleur et des projections de métal, est placée une source de courant continu 4, par exemple un transformateur-redresseur comprenant deux pôles, respectivement un pôle négatif 41 relié par des conducteurs d'alimentation 22 aux électrodes consommables 2 et un pôle positif 42 relié par des conducteurs de retour 5 aux électrodes de sole 3.

Grâce à ces dispositions bien connues, le passage du courant dans les électrodes entraîne la formation d'arcs électriques 20 entre les électrodes 2 et la ferraille qui, par fusion forme un bain 16 de métal liquide. Le passage du courant est maintenu jusqu'à fusion complète et obtention, par addition d'éléments d'alliage, de la composition souhaitée.

Pour éviter autant que possible l'influence des champs magnétiques produits par le passage de courant dans les conducteurs sur les arcs électriques, il est préférable de faire partir les conducteurs dans une direction verticale parallèle aux électrodes jusqu'à une distance suffisante pour que les parties horizontales des conducteurs se raccordant à la source de courant 4 n'aient pas d'influence appréciable sur les arcs. C'est la solution adoptée sur le figure pour les électrodes 2 de voûte. On pourrait adopter une solution analogue pour les conducteurs de retour 5 mais une telle disposition présente l'inconvénient de faire passer les conducteurs dans la zone placée au-dessous de la cuve et dans laquelle il est intéressant de laisser un passage pour les chariots de support des poches de coulée.

En rapprochant les conducteurs 5 de la cuve, on augmente les effets sur les arcs des champs magnétiques créés par le passage du courant dans les conducteurs et, précisément, au lieu de chercher à éviter de tels effets, par exemple en écartant autant que possible les conducteurs du fond de la cuve, on va au contraire rapprocher les conducteurs de la cuve pour utiliser les champs magnétiques créés par le passage du courant, de façon à contrôler le positionnement de la zone de formation des arcs grâce à un cheminement judicieux des conducteurs.

En effet, on a eu l'idée de mettre à profit les possibilités de calcul actuelles pour tenir compte de tous les éléments pouvant agir sur l'orientation des arcs et mettre au point un modèle mathématique permettant de choisir le cheminement des conducteurs en calculant le comportement prévisible des arcs avec une assez grande exactitude.

Selon les possibilités d'implantation des conducteurs, on pourra utiliser à cet effet les conducteurs de retour branchés sur les électrodes de sole en leur faisant suivre un cheminement particulier le long du fond de la cuve ou bien, dans certains cas, des parois latérales, mais on pourra aussi ajouter des conducteurs additionnels sous la cuve ou autour de la virole 12 de façon à créer artificiellement des champs magnétiques d'intensité et d'orientation contrôlées pour compenser les champs magnétiques créés par les conducteurs et, d'une façon générale, l'ensemble des éléments agissant sur les arcs.

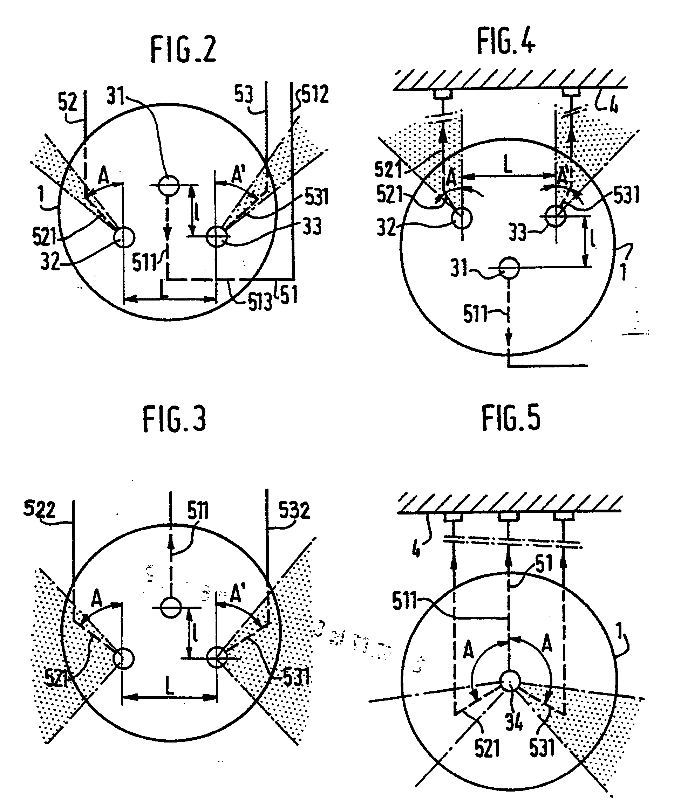

A titre d'exemple, sur les Fig. 2, 3, 4 et 5, on a représenté diverses dispositions possibles des conducteurs de retour.

D'une façon générale, dans une première étape du procédé, on calcule, par exemple au moyen d'un modèle mathématique, les effets sur les arcs de tous les éléments parcourus par un courant en tenant compte de l'intensité des courants, des caractéristiques magnétiques des différentes parties de la cuve, de l'évolution de la charge et notamment de l'élévation de température au cours des différentes phases de la fusion etc. Dans le calcul, on distingue les éléments dont les caractéristiques et le positionnement sont fixés à l'avance et ceux sur lesquels on peut agir. Par ailleurs, on fait également intervenir dans le calcul, les longueurs des conducteurs et, dans une seconde étape, on détermine la disposition nécessitant une longueur minimale de conducteurs pour un contrôle le plus efficace possible du positionnement des arcs et de leur convergence vers une zone choisie du bain métallique. A cet effet, on choisit un compromis entre le cheminement des conducteurs assurant la compensation des champs et l'augmentation de longueur qui en résulte et qui augmente le prix des conducteurs et les pertes de courant. D'une façon générale, on définira donc le trajet des conducteurs le plus économique pour obtenir la meilleure compensation possible des champs magnétiques.

Sur les Fig. 2 à 5, on a représenté schématiquement la disposition des électrodes de sole 3 et les conducteurs de retour 5 en vue de dessus.

Sur les Fig. 2, 3 et 4, on utilise, comme ce sera le cas généralement, trois électrodes de sole 31, 32, 33 disposées en triangle dans la partie centrale de la cuve 1. En revanche, dans le cas de la Fig. 5, on utilise une électrode de sole unique 34 placée au centre de la cuve. Le transformateur-redresseur 4 est toujours placé à la partie supérieure de la figure.

Selon les cas, et notamment en fonction des possibilités d'implantation des électrodes consommables 2 et des moyens de chargement de la charge, la distance L entre les électrodes latérales 32, 33 et la distance 1 entre l'électrode centrale 31 et le plan des électrodes latérales peuvent varier.

Par ailleurs, même dans le cas où l'on utilise une seule électrode centrale 34, on dispose sous la cuve trois conducteurs de retour 5 qui permettent de mieux équilibrer les champs magnétiques créés. Chaque conducteur comprend en outre, d'une façon générale, une première partie s'écartant de l'électrode de sole correspondante en cheminant le long du fond de la cuve et une deuxième partie de raccordement direct sur le transformateur-redresseur.

La première partie 511 du conducteur central 51 peut être dirigée soit directement vers le transformateur 4, soit dans la direction opposée alors que les premières parties 521 et 531 des conducteurs latéraux 52 et 53 s'écartent de la zone des électrodes suivant des directions divergentes faisant des angles opposés A et A' avec la direction du conducteur 511.

Dans le cas de la Fig. 2, la première partie 511 du conducteur central 51 part dans une direction opposée au transformateur 4 en passant entre les électrodes 32 et 33 et est reliée par un coude 513 à la partie de raccordement 512. Dans ce cas, les angles A et A' entre les premières parties 521, 531 des électrodes 52, 53 et la direction du transformateur peuvent être compris entre 45 et 60°, l'orientation étant définie en fonction des possibilités d'implantation pour obtenir la meilleure compensation possible des champs produits. Les premières parties 511, 521 et 531 des conducteurs sont prolongées dans des directions sensiblement rectilignes jusqu'à une distance telle que, à partir du coude, les champs produits par les parties de raccordement ne peuvent avoir qu'une influence négligeable sur les arcs.

Dans le cas de la Fig. 3, la première partie 511 du conducteur central se dirige directement vers le transformateur 4 suivant une direction perpendiculaire au plan des électrodes 32 et 33. Dans ce cas, les angles A et A' formés avec cette direction par les premières parties 521 et 531 des conducteurs latéraux peuvent être compris entre 45 et 135°. On voit que, dans ce cas, on dispose d'une assez large possibilité de choix pour l'orientation des conducteurs latéraux et la longueur du conducteur central 51 est réduite au minimum.

Dans le cas de la Fig. 4, I'électrode centrale 31 est placée du côté opposé au transformateur 4 par rapport au plan passant par les électrodes latérales 32 et 33. Dans ce cas, la première partie 511 du conducteur central s'écarte dans une direction opposée au transformateur 4 et les angles A et A' des conducteurs 521, 531 peuvent être compris entre 0 et 45°.

Dans le cas de la Fig. 5, le fond 11 de la cuve est muni d'une seule électrode de sole 34. Comme on l'a indiqué, celle-ci est cependant reliée au transformateur par trois conducteurs 51, 52, 53 ce qui permet d'une part, de répartir la puissance électrique et d'autre part, d'assurer une compensation des champs permettant de maintenir l'arc électrique dans une direction choisie.

Dans ce cas, le conducteur 51 de l'électrode centrale 34 est dirigée directement vers le transformateur 4 et les premières parties 521, 531 des conducteurs latéraux 52, 53 sont dirigées symétriquement suivant des directions radiales formant avec la direction du conducteur 51 des angles A et A' compris entre 105 et 135°.

On voit que des nombreuses dispositions peuvent être adoptées en fonction des puissances électriques utilisées et par conséquent, du nombre et de la répartition des électrodes et des conducteurs, des caractéristiques magnétiques des différentes parties de l'installation et notamment du fond, et des possibilités de cheminement le long du fond de la cuve.

Mais il est également possible, en particulier, lorsque l'encombrement du fond de la cuve ne permet pas de donner aux conducteurs de retour les orientations souhaitables, de compenser les effets des conducteurs au moyen de bobines d'induction placées autour de la paroi latérale de la cuve, à proximité de celle-ci.

Une telle disposition a été représentée schématiquement sur la Fig. 6 qui montre, en coupe verticale passant par l'axe d'une électrode de sole, une cuve 1 montée sur un plancher basculant 10 et munie d'électrodes de sole 3 associées à des électrodes consommables 2.

Sur le plancher 10 sont montées, aussi près que possible de la paroi latérale 12 de la cuve, des bobines d'induction 6 constituées chacune d'un noyau de fer doux 61 entouré par un bobinage constitué par un ou plusieurs enroulements alimentés en courant continu sous une intensité indépendante et variable. A cet effet, chaque bobine 6 peut être reliée directement à la source de courant continu 4 et, pour un meilleur équilibrage des intensités, comporter trois enroulements reliés par des conducteurs 62 aux trois phases du transformateur 4 par l'intermédiaire de redresseurs. Mais il est aussi possible d'alimenter les bobines directement par le courant de retour des électrodes de sole 3 en les branchant en dérivation sur les conducteurs de retour 51, comme on l'a représenté sur la Fig. 6.

Par ailleurs, les bobines d'induction peuvent être également placées sous la cuve 11 comme on l'a représenté en 63.

D'une façon générale, les positions et les orientations des bobines 6 sont déterminées de façon que le passage du courant dans les bobines crée des champs magnétiques dont les effets sur les arcs compensent les effets magnétiques produits par les autres parties de l'installation. Dans un mode de réalisation plus perfectionné, il est possible de contrôler les intensités dans les bobines 6 au moyen d'un dispositif de régulation 64 de façon que les arcs électriques se dirigent vers une zone choisie du bain et même de faire déplacer en permanence cette zone de façon à maintenir toutes les parties de la cuve à la même température.

Ainsi, alors que dans les modes de réalisation précédents on utilisait les effets magnétiques des conducteurs de retour, dans le dernier cas, le centrage des arcs est obtenu par des champs additionnels qui compensent les effets des conducteurs de retour.

Cependant, même si les dispositions qui viennent d'être décrites permettent, selon l'invention de neutraliser ou de compenser les effets des champs magnétiques produits par le passage du courant dans les conducteurs de retour, il n'en reste pas moins que l'on a intérêt à minimiser autant que possible ces effets. Dans ce but, il est intéressant de créer un écran contre les champs magnétques développés par les conducteurs de retour 51 en augmentant la perméabilité du fond 11 de la cuve placé sous la sole réfractaire 15, par exemple en augmentant l'épaisseur du fond ou bien en le réalisant en alliage métallique spécial à haute perméabilité magnétique relative. Les épaisseurs et/ou le choix des alliages seront déterminés en fonction des intensités de courant passant dans les conducteurs de retour 51.

D'autre part, les électrodes de sole 3 qui sont réalisées normalement en cuivre et en tous cas en métal amagnétique, traversent le fond 11 et ménagent donc dans celui-ci des ouvertures 30 permettant le passage des lignes de champs. Il est donc préférable, pour augmenter la protection magnétique apportée par le fond, de placer autour des conducteurs de retour des écrans magnétiques 35 se présentant sous la forme de capots ou de simples disques réalisés en tôle de forte épaisseur ou en alliage métallique à propriétés magnétiques spéciales et qui recouvrent le maximum de longueur de conducteur horizontal 51 pour le masquer vis-à-vis de l'ouverture 30 de passage des électrodes de sole 3. Ces disques peuvent être constitués par un empilage de tôles suspendues par des tirants 36 au fond de la cuve.

## Revendications

1. Procédé de fusion de matière brute ferreuse, spécialement de la ferraille dans un four électrique à courant continu comprenant une cuve (1) munie d'un fond (11) recouvert d'une sole réfractaire (15) et fermée par un couvercle amovible (13), des moyens de chargement de matière brute dans la cuve pour la formation par fusion d'un bain (16) de métal liquide, une source (4) de courant continu comprenant deux pôles (41, 42) reliés par des conducteurs d'alimentation (22) et de retour (5), respectivement à au moins une électrode consommable (2) montée coulissante verticalement à travers le couvercle (13), et à au moins une électrode fixe (3) placée dans la sole (15), pour la formation d'au moins un arc électrique (20) entre chaque électrode consommable (2) et la matière brute puis le bain fondu (16), au moins deux conducteurs de retour (5) étant disposés le long de la face extérieure du fond (11) de la cuve (1) et à proximité immédiate de celui-ci,
caractérisé par le fait que,la ou les électrodes de sole fixes (3) étant placées dans la partie centrale de la sole (15), on détermine le profil des conducteurs de retour (51) (52) de telle sorte que chacun comprenne une première partie (511, 521) s'écartant de la zone des électrodes (3) jusqu'à une distance pour laquelle le champ magnétique produit par le passage du courant a une influence négligeable sur l'arc électrique et une seconde partie (512, 522) de raccordement à la source de courant (4), et que lesdites premières parties (511, 521) des conducteurs (51, 52) s'écartent suivant des directions divergentes dont on détermine les orientations en tenant compte des possibilités d'implantation sur le fond de la cuve et de l'ensemble des influences magnétiques exercées en fonctionnement par les autres conducteurs et les différentes parties de l'installation, de façon que les effets mutuels de déviation ainsi produits soient tels que le ou les arcs soient dirigés vers une zone déterminée du bain métallique.

2. Procédé de fusion selon la revendication 1, caractérisé en ce que l'on détermine les orientations des premières parties (511, 521) des conducteurs de retour (51, 52) de façon que la résultante des efforts exercés sur les arcs par les champs magnétiques créés par le passage du courant dans lesdits conducteurs soit aussi réduite que possible.

3. Procédé de fusion selon la revendication 1, caractérisé en ce que l'on crée des champs magnétiques additionnels au moyen d'un ensemble de bobines d'induction (6) disposées autour de la cuve et dont on détermine les positions et orientations ainsi que les intensités des courants qui les parcourent, de telle sorte que les effets desdits champs additionnels compensent les effets des autres conducteurs pour diriger les arcs (20) vers une zone déterminée du bain.

4. Procédé de fusion selon la revendication 3, caractérisé en ce que les bobines d'induction (6) sont reliées à la source de courant par l'intermédiaire de conducteurs additionnels (62).

5. Procédé de fusion selon la revendication 3, caractérisé en ce que les bobines d'induction (6) sont branchées en dérivation sur les conducteurs de retour (5) des électrodes de sole.

6. Procédé de fusion selon l'une des revendications 1 à 5, caractérisé en ce que l'on détermine l'épaisseur et/ou la nature du métal constituant le fond de la cuve, de telle sorte que celui-ci constitue un écran magnétique susceptible de minimiser les effets sur les arcs du passage du courant.

7. Procédé de fusion selon la revendication 1, caractérisé en ce que, dans une prémière étape, on établit un modèle mathématique permettant de calculer les effets sur les arcs de tous les éléments parcourus par un courant électrique, en tenant compte des intensités dudit courant, des caractéristiques magnétiques des différentes parties de la cuve et de l'évolution de la charge en fonction de l'élévation de température au cours des différentes phases de la fusion, en distinguant dans le calcul les éléments fixes dont les caractéristiques et le positionnement sont fixés à l'avance et les' éléments variables sur lesquels on peut agir, et, dans une seconde étape, on fait varier le cheminement des conducteurs de façon à déterminer la disposition nécessitant une longueur minimale de conducteurs pour un contrôle optimal de la direction des arcs.

8. Four électrique de fusion de métal à courant continu, comprenant une cuve (1) limitée par un fond (11) recouvert d'une sole réfractaire (15) et une paroi latérale (12) et fermée par un couvercle amovible (13) en forme de voûte, au moins une électrode de voûte consommable (2), montée coulissante verticalement à travers la voûte (13), et au moins une électrode fixe (3) placée dans la sole (15), lesdites électrodes de voûte (2) et de sole (3) étant reliées, respectivement, aux deux bornes (41, 42) d'une source (4) de courant continu, par au moins un conducteur d'alimentation (22) et au moins deux conducteurs de retour (51, 52) disposés le long de la face extérieure du fond (11) de la cuve (1), pour la formation d'au moins un arc électrique (20) entre l'électrode consommable (2) et la matière brute telle que de la ferraille, chargée dans le four, avec fusion de celle-ci et formation d'un bain métallique (16),
caractérisé par le fait que chaque conducteur de retour (51, 52) comprend une première partie (511, 521) s'écartant de la zone des électrodes (3) jusqu'à une distance pour laquelle le champ magnétique produit par le passage du courant a une influence négligeable sur l'arc électrique et une seconde partie (512, 522) de raccordement à la source de courant (4), et que les premières parties (511, 521) des conducteurs s'écartent suivant des directions divergentes dont les orientations sont déterminées en tenant compte des possibilités d'implantation sur le fond de la cuve et de telle sorte que, pour une longueur totale optimale de l'ensemble des conducteurs de retour (5), les champs magnétiques générés par le passage du courant dans lesdits conducteurs produisent, par compensation mutuelle, un effet global de déviation tel que, compte tenu de l'ensemble des influences magnétiques exercées sur les arcs (20), ces derniers se dirigent vers une zone déterminée du bain métallique.

9. Four électrique selon la revendication 8, caractérisé par le fait que, la cuve étant munie de trois électrodes de sole (31, 32, 33) disposées en triangle, respectivement une électrode centrale (31) et deux électrodes latérales (32 et 33), la première partie (511) du conducteur de retour (51) part de l'électrode centrale (31) dans une direction opposée à la source du courant (4) en passant entre les électrodes latérales (32) et (33) et reliée par un coude (513) contournant l'une desdites électrodes latérales (33) à une partie (512) de raccordement à la source de courant, et les premières parties (521, 531) des conducteurs de retour (52, 53) des électrodes latérales (32, 33), font un angle A (A') compris entre 45 et 60° avec la direction de la source de courant.

10. Four électrique selon la revendication 8, caractérisé par le fait que, la cuve étant munie de trois électrodes de sole disposées en triangle, respectivement une électrode centrale (31) reliée à la source de courant par un conducteur central (51) et deux électrodes latérales (32, 33) reliées à la source de courant par des conducteurs de retour latéraux, respectivement (52, 53), le conducteur de retour central (51) partant de l'électrode centrale (31) est dirigé directement vers la source de courant (4) suivant une direction perpendiculaire au plan des électrodes (32) et (33), et les premières parties (521, 531) des conducteurs latéraux (52, 53) sont dirigés suivant des directions divergentes faisant un angle (A), (A'), compris entre 45 et 135°, avec la direction de la source de courant (4).

11. Four électrique selon la revendication 8, caractérisé par le fait que, le fond (11) de la cuve (1) étant muni de trois électrodes de sole disposées en triangle, respectivement deux électrodes latérales (32, 33) reliées à la source de courant par des conducteurs latéraux (52, 53) et une électrode centrale (31) placée du cté opposé à la source de courant (4) par rapport au plan passant par les électrodes latérales (32), (33), et reliées à la source de courant (4) par un conducteur de retour central (51), ce dernier compte une première partie (511) s'écartant dans une direction opposée à la source de courant (4) et les premières parties (521, 531) des conducteurs de retour (52, 53) des électrodes latérales (32, 33) s'écartent dans des directions divergentes faisant des angles (A), (A'), compris entre 0 et 45° avec la direction de la source de courant (4).

12. Four électrique selon la revendication 8, dans lequel le fond (11) de la cuve (1) est muni d'une seule électrode de sole (34), caractérisé par le fait que ladite électrode de sole (34) est reliée à la source de courant par trois conducteurs, respectivement un conducteur central (51) dirigé directement vers la source de courant (4) et deux conducteurs latéraux (52, 53) dont les premières parties (521, 531) sont dirigées symétriquement suivant des directions radiales divergentes formant, respectivement, avec la direction de la source de courant (4), un angle (A), (A'), compris entre 105 et 135°.

13. Four électrique selon l'une des revendications 8 à 12, caractérisé par le fait qu'il comprend une pluralité de bobines d'induction (6) disposées le long de la paroi et/ou le fond de la cuve et dont les positions et orientations ainsi que les intensités des courants qui les parcourent sont déterminées de façon à créer des champs magnétiques additionnels susceptibles de diriger les arcs (20) vers une zone déterminée du bain métallique (16).

14. Four électrique selon la revendication 13, caractérisé par le fait que les bobines d'induction (6) sont alimentées sous des intensités indépendantes et variables par la source de courant (4), par l'intermédiaire de conducteurs additionnels (62).

15. Four électrique selon la revendication 13, caractérisé par le fait que les bobines d'induction sont branchées en dérivation sur les conducteurs de retour (5) des électrodes de sole (3).

16. Four électrique selon l'une des revendications 8 à 15, caractérisé par le fait que l'épaisseur du fond (11) de la cuve (1) et/ou la nature du métal le constituant sont déterminées de telle sorte que ledit fond (11) constitue un écran magnétique susceptible de minimiser les effets de déviation des arcs produits par le passage du courant.

17. Four électrique selon l'une des revendications 8 à 16, caractérisé par le fait que le fond (11) de la cuve étant muni d'ouvertures (30) de passage des électrodes de sole, chaque conducteur de retour (51) est associé à un écran magnétique (35) interposé au-dessous du fond (11) de la cuve (1), entre ledit conducteur (51) et l'ouverture (30) correspondante, ledit écran (35) étant dimensionné et disposé de façon à masquer le maximum possible de longueur horizontale du conducteur (51) vis-à-vis de l'ouverture (30) correspondante.

## Patentansprüche

1. Verfahren zum Schmelzen von eisenhaltigem Rohmaterial, insbesondere von Schrott, in einem Gleichstrom-Elektroofen, bestehend aus einem Gefäss (1) mit einem von einem feuerfesten Herd (15) überdeckten Boden (11) und das durch einen abnehmbaren Deckel (13) verschlossen ist, Beschickungsmittel von Rohmaterial in das Gefäss zur Bildung eines flüssigen Metallbades (16) durch Verschmelzen, einer Gleichstromquelle (4) mit zwei Polen (41, 42), die jeweils mit mindestens einer senkrecht durch den Deckel (13) gleitbar montierten Abbrandelektrode (2) bzw. mindestens einer in dem Herd (15) fest angeordneten Elektrode (3) über Zu- (22) bzw. Rückleitungen (5) zur Bildung von mindestens einem Lichtbogen (20) zwischen jeder Abbrandelektrode (2) und dem Rohmateriel bzw. dem Schmelbad (16) verbunden sind, wobei mindestens zwei Rückleitungen (5) entlang der Aussenseite vom Boden (11) des Gefässes (1) und in unmittelbarer Nähe des selben angeordnet sind, dadurch gekennzeichnet, dass bei einer Anordnung der feststehenden Herdeleketrode(n) im Mittelteil des Herdes (15) das Profil der Rückleitungen (51) (52) derart bestimmt wird, dass jede ein sich von dem Bereich der Elektroden (3) bis zu einem Abstand entfernenden erster Abschnitt (511, 521), bei dem das durch den Stromfluss erzeugte Magnetfeld einen unbedeutenden Einfluss auf den Lichtbogen hat, und einen zweiten Abschnitt (512, 522) zum Anschliessen an die Stromquelle (4) aufweist, und dass diese ersten Abschnitte (511, 521) der Leitungen (51, 52) sich gemäss auseinangergehenden Richtungen entfernen, wobei unter Berücksichtigung der Einbaumöglichkeiten am Gefässboden und der gesamten durch die anderen Leitungen und die verschiedenen Anlagenteile im Betrieb ausgeübten Magnetauswirkungen deren Ausrichtungen so bestimmt werden, dass die somit erzeugten gegenseitigen Ablenkwirkungen so bestimmt sind, dass der bzw. die Lichtbogen gegen eine bestimmte Metallbadzone gerichtet werden.

2. Schmelzverfahren nach Anspruch 1, dadurch gekennzeichnet, dass die Ausrichtungen der ersten Teile (511, 521) der Rückleitungen (51, 52) derart bestimmt werden, dass die Resultante der durch die Magnetfelder auf die Lichtbogen ausgeübten Kräfte, welche durch den in diesen Leitungen fliessenden Strom erzeugt werden, so klein wie möglich ist.

3. Schmelzverfahren nach Anspruch 1, dadurch gekennzeichnet, dass zusätzliche Magnetfelder durch einen um das Gefäss herum angeordneten Satz Feldspulen (6) erzeugt werden, wobei deren Lagen und Ausrichtungen sowie die hindurch fliessenden Stromstärken so bestimmt werden, dass zur Ausrichtung der Lichtbogen (20) gegen eine bestimmte Schmelzbadzone die Wirkungen dieser zusätzlichen Felder die Wirkungen der anderen Leitungen kompensieren.

4. Schmelzverfahren nach Anspruch 3, dadurch gekennzeichnet, dass der Anschluss der Feldspulen (6) an der Stromquelle über zusätzliche Leitungen (62) erfolgt.

5. Schmelzverfahren nach Anspruch 3, dadurch gekennzeichnet, dass die Feldspulen (6) in Nebenschluss an den Rückleitungen (5) der Herdelektroden liegen.

6. Schmelzverfahren nach einem der Ansprüche 1 bis 5, dadurch gekennzeichnet, dass die Stärke bzw. die Beschaffenheit des den Gefässboden bildenden Metalls so bestimmt wird, dass dieser zur Minderung der Wirkungen auf die Lichtbogen durch den fliessenden Strom eine magnetische Abschirmung bildet.

7. Schmelzverfahren nach Anspruch 1, dadurch gekennzeichnet, dass unter Berücksichtigung der Stromstärken, der magnetischen Eigenschaften der verschiedenen Gefässteile und der Änderung der Charge in Abhängigkeit der Temperaturerhöhung in den verschiedenen Schmelzphasen in einem ersten Stadium eine mathematisches Modell zur Berechnung der Wirkungen auf die Lichtbogen sämtlicher stromführender Teile erstellt wird, wobei bei der Berechnung zwischen den feststehenden Elementen mit vorbestimmten Eigenschaften und Lagen und den variablen Elementen, auf die man einwirken kann, unterschieden wird, und in einem zweiten Stadium die Strecke der Leitungen so geändert wird, dass die Anordnung mit einer erforderlichen Mindestlänge der Leitungen zur optimalen Kontrolle der Lichtbogenrichtung bestimmt wird.

8. Gleichstrom-Elektroofen zum Schmelzen von Metall, bestehend aus einem Gefäss (1), das durch einem Boden (11) mit einem darüber angeordneten feuerfesten Herd (15) und durch eine Seitenwand (12) begrenzt ist und durch einen abnehmbaren als Gewölbe ausgebildeten Deckel (13) verschlossen ist, aus mindestens einer senkrecht durch das Gewölbe (13) gleitbar montierten Deckel-Abbrandelektrode (2), und aus mindestens einer feststehenden, in dem Herd (15) angeordneten Elektrode (3), wobei zur Bildung mindestens eines Lichtbogens (20) zwischen der Abbrandelektrode (2) und dem in dem Ofen beschickten Rohmaterial wie Schrott, mit Schmelzen des selben und Bildung eines Metallbades (16) diese Gewölbe- (2) bzw. Herdelektroden (3) jeweils an die Klemmen (41, 42) einer Gleichstromquelle (4) über jeweils mindestens eine Zu- (22) und mindestens zwei entlang der Aussenseite vom Boden (11) des Gefässes (1) angeordneten Rückleitungen (51, 52) angeschlossen sind, dadurch gekennzeichnet, dass jede Rückleitung (51, 52) ein erster sich von der Zone der Elektroden (3) bis zu einem Abstand entfernenden Abschnitt (511, 521) umfasst, bei dem das durch den durchfliessenden Strom erzeugte Magnetfeld einen vernachlässigbaren Einfluss auf den Lichtbogen hat, sowie ein zweiter zur Stromquelle (4) angeschlossener Abschnitt (512, 522), und dass die ersten Leitungsabschnitte (511, 521) sich in entgegengesetzten Richtungen voneinander entfernen, wobei unter Berücksichtigung der Einbaumöglichkeiten am Gefässboden deren Ausrichtungen so bestimmt werden, dass bei einer optimalen Gesamtlänge sämtlicher Rückleitungen (5) die durch den in diesen Leitungen fliessenden Strom erzeugten Magnetfelder durch gegenseitigen Ausgleich eine gesamte Ablenkwirkung derart generieren, dass, unter Berücksichtigung sämtlicher auf die Lichtbogen (20) wirkenden Einflüsse, diese sich gegen eine bestimmte Metallbadzone richten.

9. Elektroofen nach Anspruch 8, dadurch gekennzeichnet, dass bei dem Gefäss mit drei Herdelektroden (31, 32, 33) in einer Dreieckanordnung, und zwar eine Zentralelektrode (31) und zwei Seitenelektroden (32 und 33), der erste Abschnitt (511) der Rückleitung (51) von der Zentralelektrode (31) aus in eine der Stromquelle (4) entgegengesetzten Richtung (4) zwischen den Seitenelektroden (32) und (33) verläuft und mit einem an die Stromquelle angeschlossener Abschnitt (512) über einen eine diese Seitenelektroden (33) umgehender Bogen (513) verbunden ist, und die ersten Abschnitte (521, 531) der Rückleitungen (52, 53) der Seitenelektroden (32, 33) mit der Ausrichtung der Stromquelle einen Winkel A (A') zwischen 45 und 60° bilden.

10. Elektroofen nach Anspruch 8, dadurch gekennzeichnet, dass bei dem Gefäss mit drei Herdelektroden in einer Dreieckanordnung, und zwar eine über eine Zentralleitung (51) mit der Stromquelle verbundenen Zentralelektrode (31) und zwei über seitliche Rückleitungen (52, 53) mit der Stromquelle verbundenen Seitenelektroden (32, 33), die von der Zentralelektrode (31) ausgehende zentrale Rückleitung (51) direkt zur Stromquelle (4) hin gemäss einer zur Ebene der Elektroden (32) und (33) senkrechten Richtung ausgerichtet ist, und die ersten Abschnitte (521, 531) der Seitenleitungen (52, 53) gemäss auseinanderlaufenden Richtungen ausgerichtet sind, die ein Winkel (A) (A') zwischen 45 und 135° mit der Richtung der Stromquelle (4) bilden.

11. Elektroofen nach Anspruch 8, dadurch gekennzeichnet, dass bei dem Boden (11) des Gefässes (1) mit drei Herdelektroden in einer Dreieckanordnung, und zwar zwei über Seitenleitungen (52), (53) mit der Stromquelle verbundenen Seitenelektroden (32, 33) und eine auf der entgegengestzten Seite der Stromquelle (4) zu der durch die Seitenelektroden (32), (33) verlaufende Ebene angeordnete Zentralelektrode (31), und die mit der Stromquelle (4) über eine zentrale Rückleitung (51) verbunden ist, die letztere einen ersten sich in eine zur Stromquelle (4) entgegengesetzten Richtung entfernenden Abschnitt (511) aufweist, und die ersten Abschnitte (521, 531) der Rückleitungen (52, 53) der Seitenelektroden (32, 33) sich in entgegengestzten Richtungen entfernen, die mit der Ausrichtung der Stromquelle (4) Winkel (A), (A') zwischen 0 und 45° bilden.

12. Elektroofen nach Anspruch 8, bei welchem der Boden (11) des Gefässes (1) nur eine Herdelektrode (34) aufweist, dadurch gekennzeichnet, dass diese Herdelektrode (34) mit der Stromquelle über drei Leitungen verbunden ist, und zwar eine direkt zur Stromquelle (4) hin gerichtete Zentralleitung (51) und zwei Seitenleitungen (52, 53), deren ersten Abschnitte (521, 531) gemäss auseinanderlaufenden Radialrichtungen symmetrisch ausgerichtet sind und jeweils mit der Ausrichtung der Stromquelle (4) einen Winkel (A), (A') zwischen 105 und 135° bilden.

13. Elektroofen nach einem der Ansprüche 8 bis 12, dadurch gekennzeichnet, dass er eine Vielzahl entlang der Wand bzw. des Gefässbodens angeordneter Feldspulen (6) aufweist, wobei deren Lagen und Ausrichtungen sowie die hindurch fliessenden Stromstärken zur Erzeugung zusätzlicher Magnetfelder so bestimmt werden, dass diese die Lichtbogen (20) gegen eine bestimmte Zone im Metallbad (16) richten.

14. Elektroofen nach Anspruch 13, dadurch gekennzeichnet, dass die Einspeisung der Feldspulen (6) durch die Stromquelle (4) über zusätzliche Leitungen (62) mit variablen und unabhängigen Stromstärken erfolgt.

15. Elektroofen nach Anspruch 13, dadurch gekennzeichnet, dass die Feldspulen im Nebenschluss an den Rückleitungen (5) der Herdelektroden (3) liegen.

16. Elektroofen nach einem der Ansprüche 8 bis 15, dadurch gekennzeichnet, dass die Stärke vom Boden (11) des Gefässes (1) bzw. die Beschaffenheit des diesen bildenden Metalls so bestimmt wird, dass dieser Boden (11) eine magnetische Abschirmung zur Minderung der Ablenkwirkungen der durch den fliessenden Strom erzeugten Lichtbogen bildet,

17. Elektroofen nach einem der Ansprüche 8 bis 16, dadurch gekennzeichnet, dass bei dem Durchgangsöffnungen (30) für die Herdelektroden aufweisenden Gefässboden (11), jeder Rückleitung (51) eine magnetische Abschirmung (35) zugeordnet ist, die unter dem Boden (11) vom Gefäss (1) zwischen dieser Leitung (51) und der entsprchenden Öffnung (30) dazwischengeschaltet ist, wobei diese Abschirmung (35) so dimensionniert und angeordnet ist, dass sie die grösstmögliche horizontale Länge der Leitung (51) gegenüber der entsprechenden Öffnung (30) abdeckt.

## Claims

1. Process for melting ferrous raw material, especially scrap, in an electric direct-current furnace comprising a shaft (1) having a bottom (11), covered with a refractory hearth (15), and closed by a removable cover (13), means for loading raw material into the shaft in order to form a bath (16) of liquid metal as a result of melting, a direct-current source (4) comprising two poles (41, 42) connected by means of feed conductors (22) and return conductors (5) respectively to at least one consumable electrode (2) mounted so as to slide vertically through the cover (13) and to at least one fixed electrode (3) located in the hearth (15), for forming at least one electric arc (20) between each consumable electrode (2) and the raw material and then the molten metal bath (16) at least two return conductors (5) being provided along the outer face of the bottom (11) of the shaft (1) and adjacent thereof, characterized in that the fixed electrode(s) (3) of the hearth being located in the central part of the hearth (15) the profile of the return conductors (51) (52) is determined such as each comprises a first part (511, 521) deviating from the electrodes area (3) according to a distance for which the magnetic field resulting from the passage of the current has an insignifiant effect on the electric arc and a second part (512, 522) of connection to the current source (4) and in that the said first parts (511, 521) of the conductors (51, 52) deviate according to divergent directions the orientations of which are determinated according to the implantation possibilities on the bottom of the shaft and the whole magnetic influences produced by the others conductors during operation and the different parts of the apparatus such as the produced mutual deviating effects are such that the arc(s) is/are directed towards a determined area of the molten metal bath.

2. Melting process according to claim 1 characterized in that the orientations of the first parts (511, 521) of the return conductors (51, 52) are determined such as the resultant of the forces exerted on the arcs by the magnetic fields provided by the current passage in said conductors is as low as possible.

3. Melting process according to claim 1 characterized in that additional magnetic fields are generated by means of a set of induction coils (6) which are arranged around the shaft and of which the positions and orientations and the intensities of the currents passing through them are determined, in such a way that the effects of the said additional fields compensate the effects of the other conductors, in order to direct the arcs (20) towards a specific zone of the bath.

4. Melting process according to claim 3, characterized in that the induction coils (6) are connected to the current source by means of additional conductors (62).

5. Melting process according to claim 3, characterized in that the induction coils (6) are connected in parallel to the return conductors (5) of the hearth electrodes.

6. Melting process according to one of claims 1 to 5, characterized in that the thickness and/or nature of the metal forming the bottom of the shaft are determined in such a way that this bottom forms a magnetic screen capable of minimizing the effects of the passage of current on the arcs.

7. Melting process according to claim 1, characterized in that, in a first step, a mathematical model is set up, making it possible to calculate the effects on the arcs of all the elements through which an electrical current passes, taking into account the intensities of the said current, the magnetic characteristics of the various parts of the shaft and the evolution of the batch as a function of the rise in temperature during the various stages of melting, a distinction being made in the calculation between the fixed elements, of which the characteristics and positioning are fixed in advance, and the variable' elements on which action can be taken, and in a second step the routing of the conductors is varied so as to determine the arrangement requiring a minimum length of conductors for the best possible control of the direction of the arcs.

8. Electric direct-current metal-melting furnace, comprising a shaft (1) limited by a bottom (11), covered with a refractory hearth (15), and a sidewall (12) and closed by a removable cover (13) in the form of a vault, at least one consumable vault electrode (2) mounted so as to slide vertically through the vault (13), and at least one fixed electrode (3) located in the hearth (15), the said vault electrode (2) and the said hearth electrode (3) being connected respectively to two poles (41, 42) of a direct-current source (4) by at least a feed conductor (22) and at least two return conductors (51,52) located along the outer face of the bottom (11) of the shaft (1) to form at least an electric arc (20) between the consumable electrode (2) and the raw material such as scrap introduced in the furnace with melting thereof and production of a molten metal bath (16), characterized in that each return conductor (51, 52) comprises a first part (511, 521) deviating from the electrodes area (3) to a distance for which the magnetic field resulting from the passage of the current has an insignifiant effect on the electric arc and a second part (512, 522) of connection to the current source (4) and in that the first parts (511, 521) of the conductors deviate according to divergent directions the orientations of which are determinated according to the implantation possibilities on the bottom of the shaft and such as for a whole optimum length of the return conductor assembly (5), the magnetic fields generated by the passage of the current in said conductors produce by' mutual compensation a whole deviating effect such as in view of the whole magnetic effects produced on the arcs (20) said latter are directed towards a determinated area of the molten metal bath.

9. Electric furnace according to claim 8, characterized in that the shaft being provided with three hearth electrodes (31,32,33) located in a triangle configuration, respectively a central electrode (31) and two lateral electrodes (32 and 33) the first part (511) of the return conductor (51) starts from the central electrode (31) in an opposite direction to the current source (4) passing between the lateral electrodes (32) and (33) and connected to a bend (513) passing round one of said lateral electrodes (33) to a part (512) of connection at the current source and the first parts (521,531) of the return conductors (52,53) of the lateral electrodes (32,33) provide an angle A (A') between 45 and 60° with the direction of the current source.

10. Electric furnace according to claim 8, characterized in that the shaft being provided with three hearth electrodes located in a triangle configuration respectively a central electrode (31) connected to a current source by a central conductor (51) and two lateral electrodes (32,33) connected to the current source by lateral return conductors respectively (52, 53), the central return conductor (51) starting from the central electrode (31) is directed directly towards the current source (4) according to a direction perpendicular to the electrodes plane (32) and (33) and the first parts (521,531) of the lateral conductors (52,53) are directed according to divergent directions giving an angle (A), (A') between 45 and 135 with the direction of the current source (4).

11. Electric furnace according to claim 8, characterized in that the bottom (11) of the shaft (1) being provided with three hearth electrodes located in a triangle configuration, respectively two lateral electrodes (32, 33) connected to the current source by lateral conductors (52, 53) and a central electrode (31) located on the opposite side of the current source (4) with regard to the plane passing through the lateral electrodes (32), (33) and connected to the current source (4) by a central return conductor (51), said latter having a first part (511) deviating in an opposite direction to the current source (4) and the first parts (521, 531) of the return conductors (52, 53) of the lateral electrodes (32,33) deviate in divergent directions giving angles (A), (A') between O and 45° with the current source direction.

12. Electric furnace according to claim 8, in which the bottom (11) of the shaft (1) is provided with only one hearth electrode (34), characterized in that said hearth electrode (34) is connected to a current source by three conductors respectively a central conductor (51) directed directly towards the current source (4) and two lateral conductors (52,53) the first parts of which (521,531) are directed symetrically according to divergent radial directions giving respectively with the current source direction (4) an angle (A), (A') between 105 and 135°.

13. Electric furnace according to one of claims 8 to 12, characterized in that it comprises a plurality of induction coils (6) which are arranged along the wall and/or the bottom of the shaft and of which the positions and orientations as well as the current intensities passing through them are determinated so as to provide additional magnetic fields liable of directing the arcs (20) towards a determinated area of the molten metal bath (16).

14. Electric furnace according to claim 13, characterized in that the induction coils (6) are fed by the current source (4) at independent and variable intensities by means of additional conductors (62).

15. Electric furnace according to claim 13, characterized in that the induction coils are connected in parallel to the return conductors (5) of the hearth electrodes (3).

16. Electric furnace according to one of claims 8 to 15, characterized in that the thickness of the bottom (11) of the shaft (1) and/or the nature of the metal of which it is made are determined in such a way that the said bottom (11) forms a magnetic screen capable of minimizing the deflection effects exerted on the arcs as a result of the passage of current.

17. Electric furnace according to one of claims 8 to 16, characterized in that, with the bottom (11) of the shaft being provided with passage orifices (30) for the hearth electrodes, each return conductor (51) is associated with a magnetic screen (35) interposed underneath the bottom (11) of the shaft (1) between the said conductor (51) and the corresponding orifice (30), the dimensions and arrangements of the said screen (35) being such as to mask the maximum possible horizontal length of the conductor (51) relative to the corresponding orifice (30).
